# EUROPEAN PATENT SPECIFICATION

(11) **EP 0 805 848 B1**
(45) Date of publication and mention of the grant of the patent: **15.03.2000**
(21) Application number: 96900366.4
(22) Date of filing: 17.01.1996
(51) Int. Cl.: C12G 3/06

(54) **APPARATUS FOR AND METHOD OF MANUFACTURING CASK STAVES**
VERFAHREN UND VORRICHTUNG ZUR HERSTELLUNG VON FASSDAUBEN
APPAREILLAGE ET PROCEDE POUR LA FABRICATION DE DOUVES DE FUTS

(30) Priority: 19.01.1995 GB 9501049
(43) Date of publication of application: 12.11.1997
(73) Proprietor: EA TECHNOLOGY LIMITED, Capenhurst, Chester CH1 6ES (GB)
(72) Inventor: JONES, Peter, Leslie, Chester CH2 3RB (GB)
(74) Representative: McLeish, Nicholas Alistair Maxwell
(86) International application number: GB9600084
(87) International publication number: WO9622358

(56) References cited:
- GB-A- 2 163 777
- DATABASE WPI Section Ch, Week 7932 Derwent Publications Ltd., London, GB; Class D16, AN 79-59532B XP002000314 & SU,A,630 292 (MOSC FOOD IND TECH) , 12 September 1978

## Description

The present invention relates to a method and apparatus for manufacturing cask staves which can subsequently be either automatically or manually assembled into casks.

In the production of Scotch whisky the distilled spirit is placed in oak casks and stored for a minimum of three years to mature and to develop characteristic flavour and colour. The maturation takes place as a result of the reaction between the spirit, heat generated derivatives of the oak and oxygen. The position within the wood at which this reaction occurs moves outwards as time passes and the spirit penetrates the wood. Because of the methods of heating in conventionally made casks, the availability of the wood components required for maturation reduces with depth.

In order for maturation to take place these so called precursors are made available within the oak by heating it to cause changes to its complex chemical structure. Traditionally this is achieved by placing newly made casks over a flame, burning the inner face and transferring heat into the body of the timber by conduction. Such a process is potentially flawed in that the degree of surface burning, the temperature gradient, and the effect this will have on the chemical structure within the volume of the timber is difficult to control.

American law requires that bourbon whisky is matured in new casks and therefore the Scotch whisky industry has purchased second-hand casks from the bourbon distilleries for many years. It is acknowledged that there is a quality problem arising from the use of casks built to a price specifically for a single fill of bourbon. At the very minimum this has meant that Scotch whisky has to be held in casks for a much longer period to achieve an acceptable degree of maturation.

As a result of the dependence on this cheap, if uncontrolled source of casks as well as other economic factors, there has been a large decline in persons skilled in the art of forming the classic barrel "bilge". The cooperages that have survived generally only repair old casks and reassemble American made ones from sets of "knocked down" staves.

The object of the present invention is to overcome the problem of providing cask staves of consistent quality from new wood which in turn allows the assembly of casks using the existing skill base of the coopers.

In accordance with the present invention there is provided a method of manufacturing a cask stave comprising the steps of providing a stave blank of the required shape and size, and volumetrically heating said stave blank such that chemical changes brought about by the heating are uniform throughout the stave blank.

The present invention also provides apparatus for the manufacture of cask staves comprising volumetric heating means for uniformly heating a stave blank of the required shape and size such that uniform chemical changes take place throughout said stave blank.

The main difference between the traditional method of heat treatment and the heat treatment method of the present invention is in the depth and degree of uniformity of heating which can be achieved throughout the thickness of the stave. The more uniform heat treatment of the stave using the method and apparatus of the present invention has the effect of making more of the precursors available for exchange with the spirit and thereby enhances the maturation both in time and in specific characteristics of flavour and colour. The more uniform heating of the thickness of the stave also provides the benefit of providing a sufficient reserve of precursors for second and subsequent fills of the cask.

Since much of the marketable characteristics of whisky arises from the craft of maturation and that in turn is dependent upon the condition of the wood with which the spirit makes contact, it is important that the new method is able to mimic the traditional one as and when required. The traditional method involves heating the inner surface of casks to high temperature e.g. using a flame which has the effect of charring as well as changing the internal wood chemistry. Thus to mimic this process in accordance with one embodiment of the present invention for casks such as whisky casks, a combination of volumetric and surface heating is used. The volumetric heating can be achieved by dielectric heating e.g. using radio frequency electromagnetic radiation or microwave radiation. This cannot be used alone for the production of staves for whisky casks since a burnt inner surface is required to provide colour and flavour. The burnt surface is achieved in accordance with one embodiment of the present invention using radiant heat such as an infrared source.

Thus for the production of whisky cask staves in accordance with an embodiment of the present invention a combination of volumetric heating and surface heating is able to mimic the traditional technique whilst providing the additional benefit of a more uniform heating of the wood.

With spirits other than Scotch whisky, e.g. other whiskies and brandies, and with wines, the heating process to provide the required colour and flavour may only require the volumetric heating of the cask staves. During the volumetric heating the process for the production of cask staves, in order to reduce surface heat loss and enhance the uniform heating of the cask staves, hot air can be circulated around the staves. During the volumetric heating the staves are typically heated to a temperature of 100°C and 140° and the temperature of the air being circulated can be of a similar range. In order to avoid damage to the structure of the wood the rate of temperature rise must be controlled and it has been found that the time taken to reach the maximum temperature should be in the region of at least two or three minutes.

Although in the embodiment described hereinafter the surface heating of the staves takes place after the volumetric heating, the present invention is not limited to this since it is believed that the two heating stages, if carried out, can be carried out in any order.

In order to achieve the desired toasting of the surface of the cask staves preferably the radiant heater operates at a temperature in the range of 600°C to 900°C. The duration of the surface heating will then be determined by the degree of toasting which is required and this is determined by the requirements of the spirit to be matured.

In accordance with a further embodiment of the present invention a cask stave may be formed with a desired degree of curvature by supporting the stave on two supports such that said stave is supported just inboard of ends of said stave, and applying a force to a point on said stave between said supports until said stave achieves said desired degree of curvature.

There is also described apparatus for preforming cask staves comprising a support arrangement for supporting a pre-cut elongate stave, said support arrangement comprising two supports to support said stave just inboard of ends of said stave, and a press for applying a force to a point on said stave between said supports until said stave achieves a desired degree of curvature.

Thus staves can be pressed automatically to the desired shape. The shape is held for the time necessary for the shape to be set whereby the finished stave can then be made available for assembly into a cask.

In accordance with one embodiment where the staves to be pressed have already undergone the heat treatment process, the staves are passed straight into the press to be pressed whilst still hot.

Where the staves have not yet undergone the heat treatment, or have been allowed to cool off, in accordance with one embodiment of the present invention the staves can be heated either directly before or during the pressing process.

The apparatus is able to press a plurality of cask staves simultaneously and comprises conveying means for conveying a plurality of the staves between the support arrangement and the press.

The support arrangement is arranged to support a plurality of the staves simultaneously and the press is arranged to apply a force to the plurality of staves simultaneously.

Conveniently the conveying means comprises two parallel conveyors arranged to support and convey a plurality of substantially parallel spaced staves. In this arrangement the conveyors are preferably arranged to be deflected when the force is applied to the staves by the press such that the staves become supported by the support arrangement.

There is a risk of stave breakage during the pressing operation. It has been found that the addition of water to the back face of the stave immediately before or during the application of pressure to it minimises this risk. The water can be applied in a number of ways including full immersion, wiping and spraying.

In order for the final shape of the stave to be held, it is preferable for the press to apply the force for between two and five minutes.

An embodiment of the present invention will now be described with reference to the drawings, in which:-
Figure 1 is a schematic side elevation view of a cask stave forming apparatus in accordance with one embodiment of the present invention;

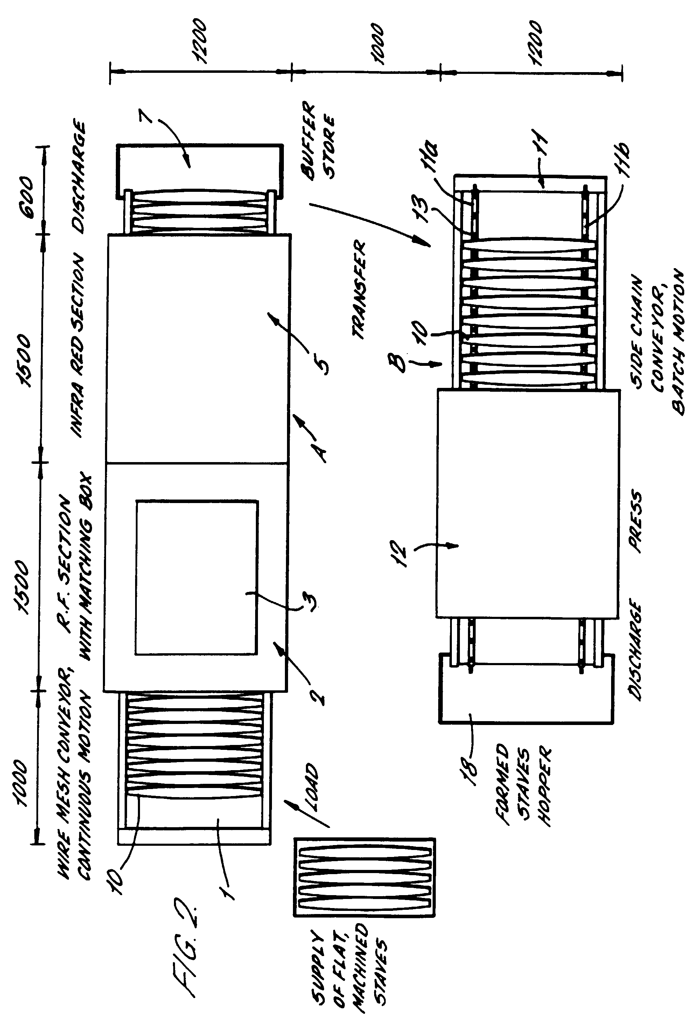

Figure 2 is a plan - view of the arrangement of Figure 1;
Figure 3a is a side elevation of the press of Figure 1 during the press operation; and
Figure 3b is a plan - view of the press of figure 1 showing the components in more detail.

The drawings illustrate apparatus for the manufacture of cask staves in accordance with one embodiment of the present invention. As can be seen in the drawings, a heating section generally indicated by A is provided and includes a continuously operating conveyor 1 onto which staves 10 which have been pre-cut to the desired shape and size can be loaded at one end. The staves are generally flat elongate pieces of wood with tapering ends. In cross-section the upper (inner) surface is slightly concave whilst the lower (outer) surface is slightly convex. The cross-sectional shape is necessary to form the bilge. The staves 10 are then transported by the conveyor 1 into a volumetric heating section 2 which provides volumetric heating by the application of radio frequency electromagnetic radiation. The volumetric heating section 2 comprises a radio frequency heating section in this embodiment and includes a matching box 3 and an RF electrode 4 which is suspended above the conveyor.

Once the staves 10 have been volumetrically heated as they pass through the radio frequency (RF) section 2, they pass on the conveyor 1 into a radiant heating section 5. The radiant heating section 5 comprises an array of infrared emitters 6 suspended above the conveyor 1 to thereby toast the upper (inner) surface of the cask staves 10 as they pass through the radiant heating section 5.

Once the staves 10 have passed on the conveyor 1 through the radiant heating section 5 they are discharged into a buffer store 7 whereafter they are transferred into the pressing section generally indicated by B in the drawings.

The pressing section B comprises a conveyor arrangement 11 for conveying a plurality of parallel spaced heated staves 10 through the press arrangement 12. The conveyor arrangement 11 comprises two parallel chain conveyors 11a and 11b which support the staves 10 just inboard of their outer ends. The chain conveyors 11a and 11b carry locators 13 to position each stave 10 so that it is presented correctly to the press arrangement 12.

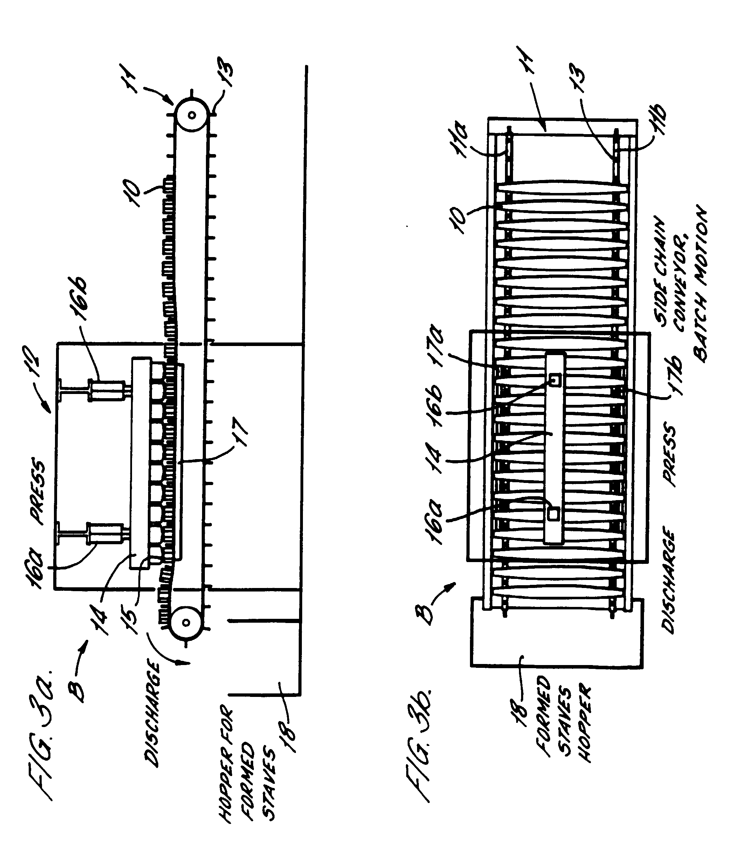

The conveyor arrangement 11 conveys the staves 10 into the press arrangement 12. The press arrangement 12 comprises a male press part 14 comprising a plurality of male press faces 15. The male press part 14 is arranged to lie above the centre of a plurality (in the illustrated example 10) of staves 10. The male press part 14 is connected to and driven by two actuators 16a and 16b which can operate to force the male press member against the upper surfaces of the centre part of the staves 10 as shown in Figure 3a.

The faces 15 of the press male part 14 have a convex surface in two orthogonal directions so that when they contact the upper surface of the centre portion of the staves 10 they tend to induce a curvature along the elongate axis of the staves 10 and fit into the concave shape of the upper (inner) surface of the stave without damaging its edges.

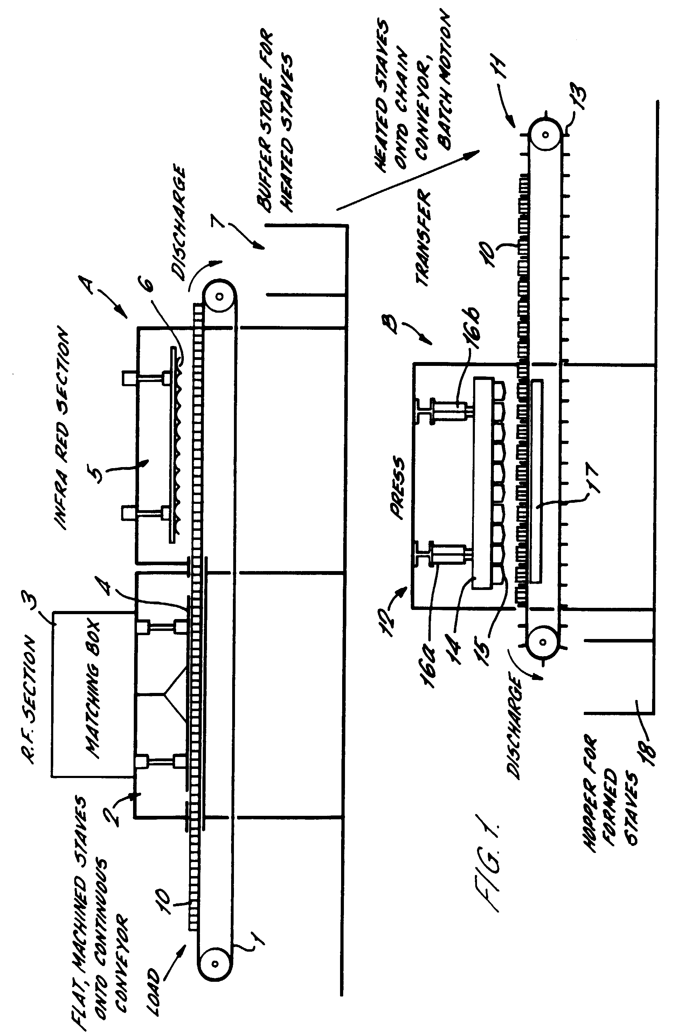

As can be seen in Figure 1, beneath the chain conveyors 11a and 11b there is provided a female press arrangement 17 which can be seen in Figure 3b as comprising two parallel bars 17a and 17b arranged at or near the ends of the staves 10.

As can be seen more clearly in Figure 3a, during operation of the press 12, the actuators 16a and 16b force the male press part 14 against the upper surfaces of a plurality of staves 10, whereby the chain conveyors 11a and 11b are deflected such that the ends of the staves 10 come into contact with the female press arrangement 17 comprising the bars 17a and 17b. Further force by the actuators 16a and 16b causes the curving of the staves 10. The pressing section B also includes a hopper 18 to receive the formed staves. Alternatively the formed staves can be discharged into an assembly jig for the automatic forming of casks.

The operation of the cask stave manufacturing apparatus will now described. Staves which have been pre-cut to the required shape and size from new wood are loaded onto the conveyor belt 1 of the heating section A and continually pass first through a radio frequency heated zone 2 where the temperature of the body of the stave 10 is raised to a predetermined temperature which is preferably in the order of 100°C to 140°C. This has the effect of changing the chemical structure of the wood to release the chemical precursors. This heating process also makes the structure of the wood more pliable for later forming. The rate of temperature rise must be controlled to avoid damage to the structure of the wood and it has been found that three minutes is a satisfactory time in which to raise the temperature with minimum damage. In the volumetric heating section 2 in order to ensure a more even heating of the staves 10, heated air can be simultaneously applied in order to prevent heat loss from the surface of the staves 10. A convenient air temperature for this is in the region of 130°C.

The stave blanks 10 are then carried into a surface toasting zone which is the radiant heating section 5 which can either be electrically or gas operated. In the radiant heating section 5 what will become the inner cask surface is then heated using a high power density non-contact heating system which can conveniently be a medium wave electric or gas infrared heater with an emitter surface temperature in the range of 600°C to 900°C. The so-called "toasting" of the surface causes local changes to the wood chemistry manifest by a colour change. The degree of toasting is controlled by the duration of the heating to achieve the desired flavour and colour characteristics as specified by a distiller.

Once the staves 10 have been heated in the two stages they can be transferred automatically or manually to the pressing section B, where by mechanical or hydraulical means the stave is formed to the desired shape whilst still hot.

The staves 10 are transferred onto a conveyor arrangement 11 and are arranged to lie spaced and parallel with the toasted surface facing upwards. The staves 10 are then transferred into the press arrangement 12.

Within the press arrangement 12 a male press member 14 is forced onto the middle section of the toasted upper surface of the staves 10 whereby the conveyor arrangement 11 is deflected downwards until the staves 10 contact the female press arrangement 17. The female press arrangement 17 supports the ends of the staves and further application of force by the male press arrangement 14 causes the staves 10 to bend.

In use casks are required to be watertight. To achieve this it is necessary that the formed staves offered up for assembly are slightly under bent so that the metal hoops can pull them to final shape during assembly. It is therefore important that the degree of over-bend and spring-back is controlled accordingly. Provision is made on the press to adjust the position of a stop on the closing stroke to achieve this.

There is a risk of stave breakage during the pressing operation and the application of water to the back face of the stave immediately before pressure is applied minimises the risk of breakage. The water can be applied to the stave 10 in a number of ways including immersion, wiping and spraying. In the embodiment illustrated the preferred method is spraying.

In order for the stave 10 to achieve final shape, it is necessary for the stave to be held by the press for a minimum time. A typical cycle time of press closure, hold and press release is in the region of three minutes.

Although the embodiment of the present invention described hereinabove includes both the heating section A and the pressing section B, the present invention is not limited to the combination of such features although a most useful method of forming cask staves for certain applications is achieved using the combination.

For example, it is also within the scope of the present invention to only utilise the heating section A to provide cask staves which have been heat treated as desired for assembling into casks using traditional methods. Alternatively the heating section A can be used to heat treat second hand staves which have become "exhausted" by earlier fills. In this case the pressing section B is not required.

Although the embodiment illustrated in the drawings uses only two actuators 16a and 16b for the pressing there may be any number. In order to take account of variations in stave dimensions each of the faces 15 of the male press part 14 may be provided with an individual actuator and each face 15 may be of a different shape i.e. curvature.

## Claims

1. A method of manufacturing cask staves comprising the steps of providing a stave blank (10) of the required shape and size, and volumetrically heating said stave blank (10) such that chemical changes brought about by the heating are uniform throughout the stave blank.

2. A method as claimed in Claim 1 wherein said stave blank (10) is dielectrically heated using electromagnetic radiation.

3. A method as claimed in Claim 2 wherein said stave blank (10) is heated using radio frequency radiation.

4. A method as claimed in Claim 2 wherein said stave blank (10) is heated using microwave radiation.

5. A method as claimed in any preceding claim including the step of heating a surface of said stave blank (10).

6. A method as claimed in Claim 5 wherein said surface of said stave blank (10) is heated using radiant heat.

7. A method as claimed in any preceding claim wherein the step of volumetric heating raises the temperature of said stave blank (10) uniformly to between 100°C and 140°C.

8. A method as claimed in Claim 7 wherein the temperature of said stave blank (10) is raised to between 100°C and 140°C within a time scale of two minutes or more.

9. A method as claimed in Claim 8 wherein said time scale is at least three minutes.

10. A method as claimed in Claim 6 wherein said radiant heat is provided by a radiant heater (6) which operates in the range of 600°C to 900°C and does not contact said surface.

11. A method as claimed in any preceding claim wherein said step of volumetric heating includes the step of circulating hot air around said stave blank (10) .

12. A method as claimed in Claim 11 wherein said air is circulated at a temperature between 100°C and 150°C.

13. A method as claimed in any preceding claim including the step of pressing the heated stave blank (10) whilst still hot to achieve a desired curvature of the heated stave blank (10).

14. A method as claimed in Claim 13 wherein said step of pressing comprises the step of placing said heated stave blank (10) on two supports (11a,11b) such that said heated stave blank (10) is supported just inboard of its ends, and applying a force to the centre of said heated stave blank (10) until the desired degree of curvature is achieved.

15. A method as claimed in Claim 13 or Claim 14 including the step of applying water to a second surface of said heated stave blank (10) opposed said surface which has been subject to radiant heating.

16. A method as claimed in Claim 15 wherein said water is applied by immersion, wiping, or spraying.

17. A method as claimed in any one of Claims 13 to 16 wherein the step of pressing takes between two and five minutes.

18. A method as claimed in any preceding claim including the step of cutting said stave blank (10) of the required shape and size from desired timber.

19. Apparatus for the manufacture of cask staves comprising volumetric heating means (2) for uniformly heating a stave blank (10) of the required shape and size such that uniform chemical changes take place throughout said stave blank (10).

20. Apparatus as claimed in Claim 19 wherein said volumetric heating means (2) comprises dielectric heating means (4) for dielectrically heating said stave blank (10) using electromagnetic radiation.

21. Apparatus as claimed in Claim 19 or Claim 20 wherein said dielectric heating means (2) comprises a radio frequency heater (4).

22. Apparatus as claimed in Claim 19 or Claim 20 wherein said dielectric heating means (2) comprises a microwave heater.

23. Apparatus as claimed in any one of Claims 19 to 22 including a radiant heater (6) for heating a surface of said stave blank (10).

24. Apparatus as claimed in any one of Claims 19 to 23 including hot air circulating means for circulating hot air around said stave blank (10) during volumetric heating.

25. Apparatus as claimed in any one of Claims 19 to 24 including conveying means (1) for conveying a plurality of said stave blanks (10) continuously through said volumetric heating means (2).

26. Apparatus as claimed in any one of claims 19 to 25 including a press (12) for pressing the heated stave blank (10) whilst still hot to achieve the desired curvature of the heated stave blank (10).

27. Apparatus as claimed in Claim 26 including a second conveying means (11) for conveying a plurality of said heated stave blanks (10) into said press (12), said press (12) being arranged to press a plurality of said heated stave blanks (10) simultaneously.

28. Apparatus as claimed in Claim 27 wherein said second conveying means (11) comprises two parallel conveyors (11a,11b) arranged to support a plurality of substantially parallel spaced heated stave blanks (10) .

29. Apparatus as claimed in Claim 28 wherein said press (2) includes a male part (14) adapted to be movable to apply a force to the centre of said heated stave blanks (10) on said conveyors (11a,11b) and a female part (17) arranged below said conveyors (11a,11b) to receive said heated stave blanks (10) as said conveyors (11a,11b) are displaced by the force applied by said male part (14), said female part (17) being arranged to support said heated stave blanks (10) just inboard of their ends whilst said force is applied by said male part (14) to said centre of said heated stave blanks (10).

30. Apparatus as claimed in any one of Claims 19 to 29 including application means for applying water to a second surface of said heated stave blank (10) which is opposed the surface which is subject to the force applied during pressing.

## Patentansprüche

1. Verfahren zum Herstellen von Faßdauben, umfassend die Schritte des Bereitstellens eines Daubenrohlings (10) der geforderten Form und Größe, sowie des volumetrischen Aufheizens des Daubenrohlings (10) derart, daß durch das Aufheizen herbeigeführte chemische Veränderungen im gesamten Daubenrohling gleichförmig sind.

2. Verfahren nach Anspruch 1, wobei der Daubenrohling (10) unter Verwendung von elektromagnetischer Strahlung dielektrisch aufgeheizt wird.

3. Verfahren nach Anspruch 2, wobei der Daubenrohling (10) unter Verwendung von Radiofrequenzstrahlung aufgeheizt wird.

4. Verfahren nach Anspruch 2, wobei der Daubenrohling (10) unter Verwendung von Mikrowellenstrahlung aufgeheizt wird.

5. Verfahren nach einem der vorhergehenden Ansprüche, umfassend den Schritt des Aufheizens einer Fläche des Daubenrohlings (10).

6. Verfahren nach Anspruch 5, wobei die Fläche des Daubenrohlings (10) unter Verwendung von Strahlungswärme aufgeheizt wird.

7. Verfahren nach einem der vorhergehenden Ansprüche, wobei der Schritt des volumetrischen Aufheizens die Temperatur des Daubenrohlings (10) gleichförmig auf zwischen 100°C und 140°C erhöht.

8. Verfahren nach Anspruch 7, wobei die Temperatur des Daubenrohlings (10) auf zwischen 100°C und 140°C innerhalb einer Zeitskala von 2 Minuten oder mehr erhöht wird.

9. Verfahren nach Anspruch 8, wobei die Zeitskala wenigstens 3 Minuten beträgt.

10. Verfahren nach Anspruch 6, wobei die Strahlungswärme durch ein Strahlungsheizelement (6) bereitgestellt wird, welches in dem Bereich von 600° C bis 900° C betrieben wird und die Fläche nicht berührt.

11. Verfahren nach einem der vorhergehenden Ansprüche, wobei der Schritt des volumentrischen Aufheizens den Schritt des Umwälzens von heißer Luft um den Daubenrohling (10) herum umfaßt.

12. Verfahren nach Anspruch 11, wobei die Luft bei einer Temperatur von zwischen 100°C und 150°C umgewälzt wird.

13. Verfahren nach einem der vorhergehenden Ansprüche, umfassend den Schritt des Pressens des aufgeheizten Daubenrohlings (10) während dieser noch heiß ist, um eine gewünschte Krümmung des aufgeheizten Daubenrohlings (10) zu erreichen.

14. Verfahren nach Anspruch 13, wobei der Schritt des Pressens den Schritt des Anordnens des aufgeheizten Daubenrohlings (10) auf zwei Trägern (11a, 11b) umfaßt, derart, daß der aufgeheizte Daubenrohling (10) von seinen Enden ein wenig einwärts aufgenommen ist, sowie des Ausübens einer Kraft auf die Mitte des aufgeheizten Daubenrohlings (10), bis der gewünschte Grad der Krümmung erreicht ist.

15. Verfahren nach Anspruch 13 oder 14, umfassend den Schritt des Aufbringens von Wasser auf eine zweite Fläche des aufgeheizten Daubenrohlings (10), welche der Fläche, die der Strahlungsheizung ausgesetzt wurde, entgegengesetzt ist.

16. Verfahren nach Anspruch 15, wobei das Wasser durch Eintauchen, Wischen oder Sprühen aufgebracht wird.

17. Verfahren nach einem der Ansprüche 13 bis 16, wobei der Schritt des Pressens zwischen 2 und 5 Minuten dauert.

18. Verfahren nach einem der vorhergehenden Ansprüche, umfassend den Schritt des Schneidens des Daubenrohlings (10) der geforderten Form und Größe von einem gewünschten Holz.

19. Vorrichtung zur Herstellung von Faßdauben, umfassend volumetrische Aufheizmittel (2) zum gleichförmigen Aufheizen eines Daubenrohlings (10) der geforderten Gestalt und Größe derart, daß im gesamten Daubenrohling (10) gleichförmige chemische Veränderungen stattfinden.

20. Vorrichtung nach Anspruch 19, wobei die volumetrischen Aufheizmittel (2) dielektrische Aufheizmittel (4) zum dielektrischen Heizen des Daubenrohlings (10) unter Verwendung von elektromagnetischer Strahlung umfassen.

21. Vorrichtung nach Anspruch 19 oder 20, wobei die dielektrischen Aufheizmittel (2) ein Radiofrequenzheizelement (4) umfassen.

22. Vorrichtung nach Anspruch 19 oder 20, wobei die dielektrischen Aufheizmittel (2) ein Mikrowellenheizelement umfassen.

23. Vorrichtung nach einem der Ansprüche 19 bis 22, umfassend ein Strahlungsheizelement (6) zum Aufheizen einer Fläche des Daubenrohlings (10).

24. Vorrichtung nach einem der Ansprüche 19 bis 23, umfassend Heißluftumwälzmittel zum Umwälzen von heißer Luft um den Daubenrohling (10) herum während des volumetrischen Aufheizens.

25. Vorrichtung nach einem der Ansprüche 19 bis 24, umfassend Fördermittel (1) zum kontinuierlichen Fördern einer Mehrzahl von Daubenrohlingen (10) durch die volumetrischen Aufheizmittel (2).

26. Vorrichtung nach einem der Ansprüche 19 bis 25, umfassend eine Presse (12) zum Pressen des aufgeheizten Daubenrohlings (10), während dieser noch heiß ist, um die gewünschte Krümmung des aufgeheizten Daubenrohlings (10) zu erreichen.

27. Vorrichtung nach Anspruch 26, umfassend ein zweites Fördermittel (11) zum Fördern einer Mehrzahl von aufgeheizten Daubenrohlingen (10) in die Presse (12), wobei die Presse (12) zum gleichzeitigen Pressen einer Mehrzahl von aufgeheizten Daubenrohlingen (10) ausgebildet ist.

28. Vorrichtung nach Anspruch 27, wobei das zweite Fördermittel (11) zwei parallele Förderer (11a, 11b) umfaßt, welche angeordnet sind, um eine Mehrzahl von im wesentlichen parallelen, mit Abstand zueinander angeordneten aufgeheizten Daubenrohlingen (10) zu tragen.

29. Vorrichtung nach Anspruch 28, wobei die Presse (2) ein männliches Teil (14) umfaßt, welches bewegbar ausgebildet ist, um eine Kraft auf die Mitte der aufgeheizten Daubenrohlinge (10) auf den Förderern (11a, 11b) auszuüben, sowie ein weibliches Teil (17) umfaßt, welches unter den Förderern (11a, 11b) angeordnet ist, um die aufgeheizten Daubenrohlinge (10) aufzunehmen, da die Förderer (11 a, 11b) durch die vom männlichen Teil (14) ausgeübte Kraft verlagert sind, wobei das weibliche Teil (17) angeordnet ist, um die aufgeheizten Daubenrohlinge (10) von deren Enden ein wenig einwärts zu stützen, während die Kraft durch das männliche Teil (14) auf die Mitte der aufgeheizten Daubenrohlinge (10) ausgeübt wird.

30. Vorrichtung nach einem der Ansprüche 19 bis 29, umfassend Aufbringmittel zum Aufbringen von Wasser auf eine zweite Fläche des aufgeheizten Daubenrohlings (10), welche der Fläche entgegengesetzt ist, die der während des Pressens ausgeübten Kraft ausgesetzt ist.

## Revendications

1. Procédé de fabrication de douves de fûts comprenant les étapes consistant à prévoir une ébauche de douve (10) de la forme et de la dimension requises, et à chauffer de façon volumétrique ladite ébauche de douve (10) de façon que des modifications chimiques entraînées par le chauffage soient uniformes dans toute l'ébauche de douve.

2. Procédé selon la revendication 1 dans lequel ladite ébauche de douve (10) est chauffée de façon diélectrique en utilisant un rayonnement électromagnétique.

3. Procédé selon la revendication 2 dans lequel ladite ébauche de douve (10) est chauffée en utilisant un rayonnement haute fréquence.

4. Procédé selon la revendication 2 dans lequel ladite ébauche de douve (10) est chauffée en utilisant un rayonnement hyperfréquence.

5. Procédé selon l'une quelconque des revendications précédentes comprenant l'étape consistant à chauffer une surface de ladite ébauche de douve (10).

6. Procédé selon la revendication 5 dans lequel ladite surface de ladite ébauche de douve (10) est chauffée en utilisant de la chaleur radiante.

7. Procédé selon l'une quelconque des revendications précédentes dans lequel l'étape de chauffage volumétrique élève la température de ladite ébauche de douve (10) de façon uniforme jusqu'à entre 100° C et 140° C.

8. Procédé selon la revendication 7 dans lequel la température de ladite ébauche de douve (10) est élevée jusqu'à entre 100° C et 140° C à l'intérieur d'une échelle de temps de deux minutes ou davantage.

9. Procédé selon la revendication 8 dans lequel ladite échelle de temps est d'au moins trois minutes.

10. Procédé selon la revendication 6 dans lequel ladite chaleur radiante est procurée par un dispositif de chauffage radiant (6) qui fonctionne dans la plage de 600° C à 900° C et ne vient pas en contact avec ladite surface.

11. Procédé selon l'une quelconque des revendications précédentes dans lequel ladite étape de chauffage volumétrique comprend l'étape de circulation d'air chaud autour de ladite ébauche de douve (10).

12. Procédé selon la revendication 11 dans lequel ledit air chaud est mis en circulation à une température entre 100° C et 150° C.

13. Procédé selon l'une quelconque des revendications précédentes comprenant l'étape de pressage de l'ébauche de douve chauffée (10) pendant qu'elle est encore chaude afin d'obtenir une courbure souhaitée de l'ébauche de douve chauffée (10).

14. Procédé selon la revendication 13 dans lequel ladite étape de pressage comprend l'étape de mise en place de ladite ébauche de douve chauffée (10) sur deux supports (11a, 11b) de façon que ladite ébauche de douve chauffée (10) soit supportée juste vers l'intérieur de ces extrémités, et l'application d'une force sur le centre de ladite ébauche de douve chauffée (10) jusqu'à ce que le degré de courbure souhaité soit obtenu.

15. Procédé selon la revendication 13 ou la revendication 14 comprenant l'étape d'application d'eau sur une seconde surface de ladite ébauche de douve chauffée (10) opposée à ladite surface qui a été soumise à un chauffage radiant.

16. Procédé selon la revendication 15 dans lequel ladite eau est appliquée par immersion, essuyage, ou pulvérisation.

17. Procédé selon l'une quelconque des revendications 13 à 16 dans lequel l'étape de pressage prend entre deux et cinq minutes.

18. Procédé selon l'une quelconque des revendications précédentes comprenant l'étape de découpe de ladite ébauche de douve (10) de la forme et de la dimension requises à partir d'un bois souhaité.

19. Appareillage destiné à la fabrication de douves de fûts comprenant un moyen de chauffage volumétrique (2) destiné à chauffer de façon uniforme une ébauche de douve (10) de la forme et de la dimension requises de façon que des modifications chimiques uniformes aient lieu dans toute ladite ébauche de douve (10).

20. Appareillage selon la revendication 19 dans lequel ledit moyen de chauffage volumétrique (2) comprend un moyen de chauffage diélectrique (4) destiné à chauffer de façon diélectrique ladite ébauche de douve (10) en utilisant un rayonnement électromagnétique.

21. Appareillage selon la revendication 19 ou la revendication 20 dans lequel ledit moyen de chauffage diélectrique (2) comprend un dispositif de chauffage haute fréquence (4).

22. Appareillage selon la revendication 19 ou la revendication 20 dans lequel ledit moyen de chauffage diélectrique (2) comprend un dispositif de chauffage hyperfréquence.

23. Appareillage selon l'une quelconque des revendications 19 à 22 comprenant un dispositif de chauffage radiant (6) destiné à chauffer une surface de ladite ébauche de douve (10).

24. Appareillage selon l'une quelconque des revendications 19 à 23 comprenant un moyen de circulation d'air chaud destiné à faire circuler de l'air chaud autour de ladite ébauche de douve (10) pendant le chauffage volumétrique.

25. Appareillage selon l'une quelconque des revendications 19 à 24 comprenant un moyen de transport (1) destiné à transporter une pluralité desdites ébauches de douve (10) en continu à travers ledit moyen de chauffage volumétrique (2).

26. Appareillage selon l'une quelconque des revendications 19 à 25 comprenant une presse (12) destinée à presser l'ébauche de douve chauffée (10) pendant qu'elle est encore chaude afin d'obtenir la courbure souhaitée de l'ébauche de douve chauffée (10).

27. Appareillage selon la revendication 26 comprenant un second moyen de transport (11) destiné à transporter une pluralité desdites ébauches de douve chauffées (10) jusque dans ladite presse (12), ladite presse (12) étant agencée pour presser une pluralité desdites ébauches de douve chauffées (10) simultanément.

28. Appareillage selon la revendication 27 dans lequel ledit second moyen de transport (11) comprend deux transporteurs parallèles (11a, 11b) agencés pour supporter une pluralité d'ébauches de douve chauffées (10) espacées pratiquement parallèles.

29. Appareillage selon la revendication 28 dans lequel ladite presse (2) comprend une partie mâle (14) agencée de façon à pouvoir être déplacée afin d'appliquer une force sur le centre desdites ébauches de douve chauffées (10) sur lesdits transporteurs (11a, 11b) ainsi qu'une partie femelle (17) disposée au-dessous desdits transporteurs (11a, 11b) afin de recevoir lesdites ébauches de douve chauffées (10) tandis que lesdits transporteurs (11a, 11b) sont déplacés par la force appliquée par ladite partie mâle (14), ladite partie femelle (17) étant agencée pour supporter lesdites ébauches de douve chauffées (10) juste vers l'intérieur de leurs extrémités pendant que ladite force est appliquée par ladite partie mâle (14) sur ledit centre desdites ébauches de douve chauffées (10).

30. Appareillage selon l'une quelconque des revendications 19 à 29 comprenant un moyen d'application destiné à appliquer de l'eau sur une seconde surface de ladite ébauche de douve chauffée (10) qui est opposée à la surface qui est soumise à la force appliquée pendant le pressage.
